# EUROPÄISCHE PATENTSCHRIFT

(11) **EP 0 658 501 B1**
(45) Veröffentlichungstag und Bekanntmachung des Hinweises auf die Patenterteilung: **30.07.1997**
(21) Anmeldenummer: 94117999.6
(22) Anmeldetag: 15.11.1994
(51) Int. Cl.: B65G 69/18

(54) **Vorrichtung zum Kuppeln von Behältnissen**
Device for coupling containers
Dispositif d'accouplement de récipients

(30) Priorität: 16.12.1993 DE 4342962
(43) Veröffentlichungstag der Anmeldung: 21.06.1995
(73) Patentinhaber: Buck Werke GmbH & Co, 73337 Bad Überkingen (DE)
(72) Erfinder: Grau, Gerhard, Dipl.-Ing., D-79379 Müllheim/Baden (DE); Koch, Martin, Dipl.-Ing. (FH), D-79395 Neuenburg - 3 / Baden (DE)
(74) Vertreter: Goddar, Heinz J., Dr.

(56) Entgegenhaltungen:
- DE-C- 458 573
- FR-A- 2 640 598

## Beschreibung

Die Erfindung betrifft eine Vorrichtung zum Kuppeln von zwei jeweils einen Anschluß-Rohrstutzen mit im wesentlichen kreisförmigem Querschnitt aufweisenden Behältnissen, nach dem Oberbegriff des Anspruchs 1. Solch eine Vorrichtung ist aus der Druckschrift EP-A-0 554 096 bekannt.

Beispielsweise in der chemischen oder insbesondere pharmazeutischen Industrie ist es häufig notwendig, mit Anschluß-Rohrstutzen versehene Behältnisse in der Weise miteinander zu kuppeln, daß in einem der Behälter vorhandenes fließfähiges Produkt in den anderen Behälter überführt werden kann, ohne daß das Produkt mit der Außenatmosphäre in Berührung kommt. Um zu gewährleisten, daß das Innere der zu kuppelnden Behältnisse erst dann geöffnet wird, wenn die beiden Behältnisse miteinander gekuppelt sind, sind in den an den jeweiligen Behältnissen vorgesehenen Rohrstutzen Schließklappen vorgesehen, die mittels je eines eigenen Schwenkantriebes um eine im wesentlichen diametral zu dem jeweiligen Rohrstutzen liegende Schwenkachse um 90° verdrehbar sind, so daß sie einmal, nämlich in der Schließstellung, den Rohrstutzen im wesentlichen abdichten, zum anderen aber, in einer Stellung, in der sie parallel zur Längsmittelachse des jeweiligen Rohrstutzens liegen, das Behältnis nach außen öffnen.

Bislang ist es üblich, derartige Schließklappen in beiden zu kuppelnden Rohrstutzen so zu lagern, daß ihre Schwenkachse gegenüber der Stirnfläche des betreffenden Rohrstutzens versetzt ist, um auf diese Weise den nötigen Raum zwischen der Stirnfläche des Rohrstutzens und der Schwenkachse für ein Verschwenken oder Drehen der jeweiligen Schließklappe zur Verfügung zu haben. Um den zwischen der betreffenden Schließklappe und der Stirnfläche des betreffenden Rohrstutzens in Schließstellung der Schließklappe vorhandenen Stirnraum, der beim Kuppeln der Behältnisse mit der Atmosphäre kurzzeitig verbunden werden muß, gegen Eindringen von Staub zu schützen, sind zusätzliche Staubdeckel auf den Stirnseiten der Rohrstutzen vorgesehen, die zunächst abgenommen werden müssen, ehe das Kuppeln der Behältnisse tatsächlich bewerkstelligt werden kann.

Die bisher bekannte Vorrichtung der vorstehend beschriebenen Art hat den Nachteil, daß in die stirnflächenseitig vor den jeweiligen Schließklappen liegenden Stirnräume der beiden Rohrstutzen nach dem Abnehmen der Staubdeckel von außen Staub eindringen kann. Ferner besteht die Gefahr, daß nach Beendigung des Produktaustauschvorganges toxisches Produkt, welches im Stirnraum an der betreffenden Rohrstutzenwandung oder auch an der betreffenden Schließklappe haftet, austritt. Ferner ist es auch nicht möglich, den Produktaustausch ohne Kontakt mit der Außenatmosphäre, z. B. unter Schutzgas, durchzuführen.

Der Erfindung liegt die Aufgabe zugrunde, die gattungsgemäße Vorrichtung dahingehend weiterzubilden, daß unter Vereinfachung des Kuppelvorganges ohne Kontakt mit der Außenatmosphäre eine Verbindung zwischen den beiden Behältnissen hergestellt und wieder aufgehoben werden kann, wobei die Gefahr sowohl des Eindringens äußerer Verschmutzung in die Rohrstutzen als auch des Austretens von z. B. toxischen Produkten in die Außenatmosphäre verhindert werden soll.

Erfindungsgemäß wird diese Aufgabe in Weiterbildung der gattungsgemäßen Vorrichtung durch die Merkmale von Patentanspruch 1 gelöst.

Dabei kann vorgesehen sein, daß der Schwenkantrieb lösbar mit der einen der Halbachsen verbindbar ist.

Ferner schlägt die Erfindung auch vor, daß der die lösbar mit dem Schwenkantrieb verbindbare Halbachse aufweisende Rohrstutzen an einem feststehenden Behältnis und der andere Rohrstutzen an einem beweglichen Behältnis angebracht ist.

Auch ist vorgesehen, daß mindestens einer der Rohrstutzen schwimmend gelagert ist.

Ferner wird erfindungsgemäß vorgesehen, daß die Rohrstutzen zueinander komplementäre Grobzentriereinrichtungen aufweisen.

Die Erfindung schlägt auch vor, daß die Schließklappen und/oder deren Halbachsen zueinander komplementäre Feinzentriereinrichtungen aufweisen.

Die Erfindung sieht auch vor, bei getrenntem Zustand der beiden Rohrstutzen der Dichtwulst die Kante der Schließklappen abdeckt.

Weiterhin schlägt die Erfindung vor, daß mindestens eine der beiden Schließklappen an der äußeren Ringfläche einen flexiblen Dichtwulst aufweist, sodaß nach dem Fügen und Öffnen der Schließklappen eine Abdichtung der Klappenhälften zueinander gegeben ist.

Die Erfindung sieht vor, daß mindestens eine der Schließklappen eine Blaseinrichtung zum Beaufschlagen der zwischen den aufeinandergedrückten Schließklappen sich bildenden Stoßkammer mit Reinigungs- und/oder Schutzgas aufweist.

Eine weitere Ausführungsform der Erfindung ist gekennzeichnet durch eine die Stoßkammer umgebende Absaugkammer.

Ferner wird erfindungsgemäß vorgesehen, daß mindestens eine der Lagerschalen aus Gleitmaterial besteht.

Die Erfindung sieht auch vor, daß die Schließklappen um eine im wesentlichen senkrecht zu ihrer jeweiligen Halbachse liegende Kippachse im wesentlichen vollständig aus den Lagerschalen herauskippbar sind.

Beide Schließklappen sind so in ihrem jeweiligen Dichtwulst angeordnet, daß die produktberührenden Flächen durch diesen in der Schließstellung abgedeckt sind. Eine Dichtung an der Stoßstelle der Schließklappen verhindert ein Austreten von Staub und ein Eindringen vom Produkt in den Spalt oder "Stoßraum" zwischen den Schließklappen.

Voraussetzung für das Funktionieren der erfindungsgemäßen Vorrichtung ist eine strenge Zentrierung der beiden Schließ-Halbklappen zueinander. Hierzu dient vorzugsweise eine schwimmende Lagerung mindestens eines Rohrstutzens. Ferner findet neben eine Vorzentrierung durch übliche Stift-Bohrungs-Anordnungen, die mit den jeweiligen Rohrstutzen verbunden sind, eine eigentliche Feinzentrierung direkt von einer Schließklappe zur anderen statt, um auf diese Weise den Einfluß baulicher Toleranzen minimal zu halten.

Erfindungsgemäß kann weiterhin in vorteilhafter Weise vorgesehen sein, daß während des Zusammenführens der Rohrstutzen aus mindestens einer Schließklappe ein Blasstrom in den Stoßraum zwischen den beiden Schließklappen bewirkt wird, so daß also die der Atmosphäre zugewandten Seiten der Schließklappen abgeblasen und gereinigt werden können, vorzugsweise unter Verwendung einer zusätzlichen Absaugkammer mit anschließendem Absaugsystem.

Die Schließklappen sind vorteilhafterweise so geformt, daß das vorstehend beschriebene Abblasen in wirksamer Weise bewerkstelligt werden kann. Vom besonderen Vorteil ist es, wenn, wie dies eine Ausführungsform der Erfindung vorsieht, die Schließklappen zu Reinigungszwecken gänzlich aus den betreffenden Rohrstutzen herausgeschwenkt werden können, da dann bei den üblichen Waschprozessen vor Produktwechsel die Schließklappen und auch die Lagerschalen gut gereinigt werden können.

Dadurch, daß bei der erfindungsgemäßen Vorrichtung eine dichte Kupplung der Behältnisse ohne inneres Totvolumen in den Anschluß-Rohrstutzen gewährleistet ist, ist eine kontaminationsfreie Übergabe von Produkten von einem Behältnis in ein anderes unter Reinraumbedingungen möglich.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist.

Dabei zeigt:
- Fig. 1: ein Ausführungsbeispiel einer Vorrichtung nach der Erfindung im Schnitt durch die Längsmittelachse von zwei zu kuppelnden Rohrstutzen in einem ersten Funktionszustand;
- Fig. 2: in Fig. 1 entsprechender Darstellung die Vorrichtung in einem zweiten Funktionszustand;
- Fig. 3: die Vorrichtung gemäß den Fig. 1 und 2 in einem dritten Funktionszustand;
- Fig. 4: die Vorrichtung gemaß den Fig. 1 bis 3 in vier unterschiedlichen Funktionszuständen, a) - d), weiter schematisiert;
- Fig. 5: einen Dichtwulst eines Rohrstutzens der Vorrichtung gemäß den Fig. 1 bis 4 im Schnitt durch die Längsmittelachse eines Rohrstutzens in einem ersten Funktionszustand; und
- Fig. 6: in Fig. 5 entsprechender Darstellung zwei aneinandergekuppelte Rohrstutzen in einem zweiten Funktionszustand.

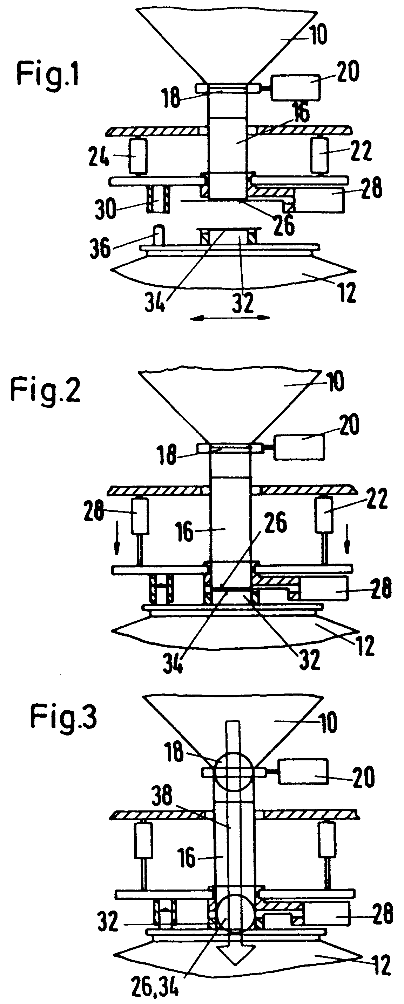

In Fig. 1 sind zwei Behältnisse 10, 12 dargestellt, die zum Überführen eines Produktes aus dem Behältnis 10 in das Behältnis 12 miteinander gekuppelt werden sollen. Das Behältnis 10 ist ein feststehender Container, das Behältnis 12 ein in Richtung eines Pfeiles 14 von der Seite her unter das Behältnis 10 verfahrbarer Transportbehälter.

Das Behältnis 10 weist an seinem unteren Ende einen Rohrstutzen 16 auf, der gegenüber dem eigentlichen Volumen des Behältnisses 10 durch eine Sperreinrichtung 18, welche mittels eines Sperrantriebes 20 geöffnet und geschlossen werden kann, in Verbindung steht. Durch Pneumatikzylinder 22, 24 ist der Rohrstutzen 16 in seiner Höhe verstellbar. Am in Fig. 1 unteren Ende des Rohrstutzens 16 befindet sich eine erste Schließklappe 26, die, wie weiter unten noch erläutert wird, mittels eines Schwenkantriebes 28 aus einer die in Fig. 1 unten liegende stirnseitige Öffnung des Rohrstutzens 16 verschließenden Schließstellung unter Verschwenken um 90° um eine in Durchmesserrichtung bezüglich des Rohrstutzens 16 liegende Schwenkachse in ihre Öffnungsstellung gebracht werden kann.

Fig. 1 läßt weiterhin erkennen, daß mit dem Rohrstutzen 16 eine Zentrierbohrung 30 verbunden ist.

Das in Richtung des Pfeiles 14 durch seitliche Verschiebung in Fig. 1 unter das Behältnis 10 gefahrene Behältnis 12 weist an seiner oberen Seite einen zum ersten Rohrstutzen 16 komplementären zweiten Rohrstutzen 32 auf, der an seiner dem Behältnis 10 zugewandten Stirnseite eine zweite Schließklappe 34 trägt, die, wie weiter unten noch erläutert wird, in ähnlicher Weise wie die erste Schließklappe 26 durch Verschwenken um 90° aus einer Schließ- in eine Offenstellung gebracht werden kann. An dem Behältnis 12 ist ein Zentrierstift 36 angeordnet, der zum Zusammenwirken mit der Zentrierbohrung 30 bestimmt ist. An den Schließklappen 26, 34 sind Feinzentriereinrichtungen in Form mindestens eines weiteren Zentrierstiftes und mindestens einer weiteren, damit zusammenwirkenden Zentrierbohrung vorgesehen, welche nach einem Grobzentrieren, welches durch das Zusammenwirken des Zentrierstiftes 36 mit der Zentrierbohrung 30 bewirkt wird, ein exaktes gegenseitiges Zentrieren der ersten Schließklappe 26 und der zweiten Schließklappe 34 ermöglichen.

Fig. 2 zeigt die Vorrichtung sowie die beiden Behältnisse gemäß Fig. 1 in einem Funktionszustand, in welchem durch Betätigung der Pneumatikzylinder 22, 24 der obere, erste Rohrstutzen 16 abgesenkt worden ist, wodurch die beiden Schließklappen 26, 34 aneinandergedrückt worden sind. Beide Schließklappen stehen in dem in Fig. 2 wiedergegebenen Funktionszustand noch senkrecht zur Längsmittelachse der Rohrstutzen 16, 32, so daß noch keine Verbindung zwischen dem Inneren des Behältnisses 10 und dem Inneren des Behältnisses 12 hergestellt ist.

In dem in Fig. 3 gezeigten Funktionszustand sind der Sperrantrieb 20 und der Schwenkantrieb 28 in der Weise betätigt worden, daß die Sperreinrichtung 18 geöffnet und die beiden Schließklappen 26, 34 mittels des Schwenkantriebes 28 in eine parallel zur Längsmittelachse der Rohrstutzen 16, 32 liegende Stellung gebracht worden sind. In dieser Stellung kann ein Produktstrom 38 unter Abschluß gegen die Außenatmosphäre von dem Behältnis 10 in das Behältnis 12 überführt werden, wobei über nicht gezeigte Blas- und Absaugeinrichtungen vor dem Öffnen der Schließklappen 26, 34 die Stoßstelle zwischen den Rohrstutzen 16, 32 gereinigt und gegebenenfalls unter Schutzgasatmosphäre gebracht werden kann. Nach Beendigung des Überganges des Produktstromes 38 werden erneut der Sperrantrieb 20 und der Schwenkantrieb 28 betätigt, wodurch das Innere des Behältnisses 10 in einem Zustand, in welchem die nach unten weisende Stirnfläche des Rohrstutzens 16 durch die erste Schließklappe 26 bündig verschlossen ist, nach außen abgedichtet ist. Ebenso ist in diesem Zustand der Rohrstutzen 32 des Behältnisses 12 durch die bündig mit seiner Stirnfläche fluchtende zweite Schließklappe 34 nach außen abgedichtet, so daß nach dem Trennen der Behältnisse 10, 12 das Innenvolumen beider Behältnisse, einschließlich der Rohrstutzen 16 bzw. 32, gegen äußere Einflüsse geschützt ist, ohne daß es des Aufsetzens zusätzlicher Staubdeckel oder dergleichen bedürfte.

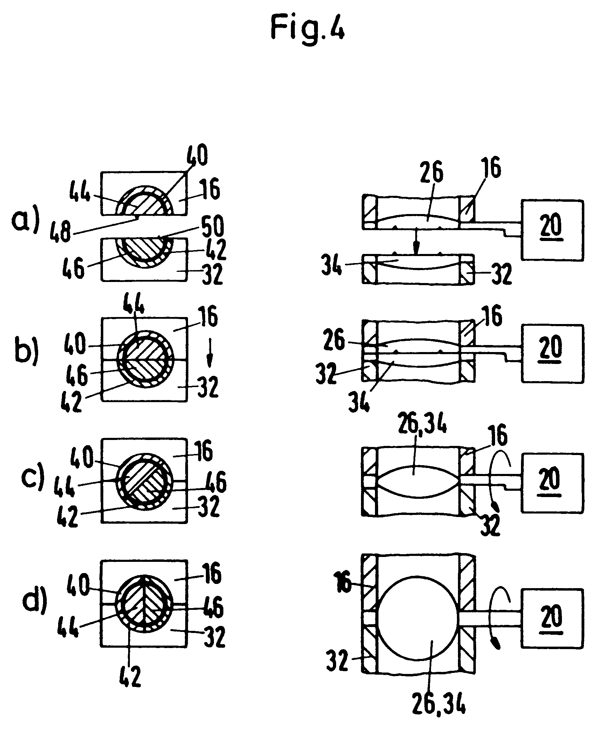

Wie Fig. 4 erkennen läßt, in der die Vorrichtung gemäß den Fig. 1 bis 3 in verschiedenen Funktionszuständen a) - d) wiedergegeben ist, sind, wobei zunächst auf Fig. 4 a) bezug genommen ist, die beiden Schließklappen 26, 34 in der Weise in einer ersten Lagerschale 40 aus Gleitmaterial, die zum ersten Rohrstutzen 16 gehört, und einer zweiten Lagerschale 42 aus Gleitmaterial, die zum zweiten Rohrstutzen 32 gehört, gelagert, daß eine fest mit der ersten Schließklappe 26 verbundene Halbachse 44 und eine fest mit der zweiten Schließklappe 34 verbundene zweite Halbachse in den zur kreisring förmigen Stirnfläche der beiden Rohrstutzen 16, 32 offenen Lagerschalen 40, 42 liegen. Eine dem jeweils anderen Rohrstutzen zugeordnete ebene Stirnfläche 48 der ersten Halbachse 44 und eine entsprechene ebene Stirnfläche 50 der zweiten Halbachse 46 fluchten mit der Stirnfläche des Rohrstutzens 16 bzw. des Rohrstutzens 32 und auch mit der jeweiligen, in Fig. a) äußeren, dem Behältnisinneren abgewandten Stirnfläche der beiden Schließklappen 26, 34.

Fig. 4 b) läßt erkennen, daß durch Absenken des Rohrstutzens 16 in Richtung des in Fig. 4 a) und Fig. 4 b) gezeigten Pfeiles die beiden Halbachsen 44, 46 zu einer Voll-Schwenkachse vereinigt worden sind, wobei in diesem Zustand die Stirnflächen der exakt aufeinander zentrierten Schließklappen 26, 34 eng aneinanderliegen.

Im Anschluß daran erfolgt dann, wie in Fig. 4 c) gezeigt, durch Betätigung des Schwenkantriebes 28 ein Verschwenken der aus den beiden Schließklappen 26, 34 gebildeten "Voll-Schließklappe", wobei die nicht unmittelbar angetriebene Schließklappe 46 des Rohrstutzens 32 durch die Schließklappe 26 des Rohrstutzens 16 mitgenommen wird, bis die Schließklappen 26, 34 dann in der in Fig. 4 d) gezeigten Position den Produktstrom freigeben.

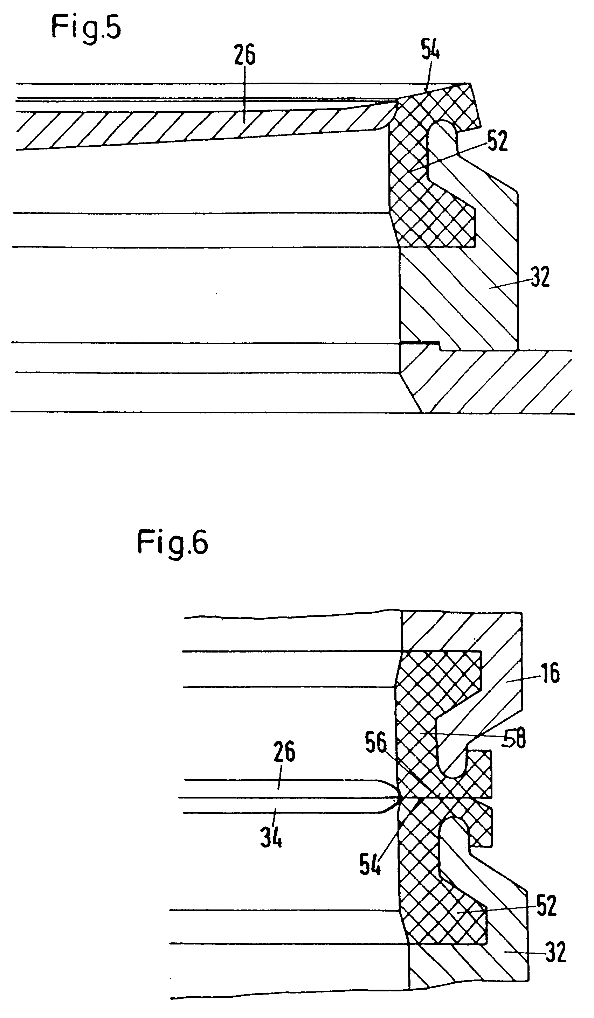

Fig. 5 läßt erkennen, daß die Schließklappe 26 des zweiten Rohrstutzens 32 in der in Fig. 5 gezeigten Schließstellung, in der noch kein Andrücken des ersten Rohrstutzens 16 erfolgt ist, mit ihrem Umfangsrand durch einen Dichtwulst 52 abgedichtet wird. Der Dichtwulst 52 weist eine schräg radial nach außen ansteigende ringförmige Stirndichtfläche 54 auf. Der Dichtwulst 52 besteht insgesamt aus elastischem Material.

Wird, wie in Fig. 6 gezeigt, der erste Rohrstutzen 16 an den zweiten Rohrstutzen 32 angedrückt, so kommt die Stirndichtfläche 54 des Dichtwulstes 52 mit einer Stirnfläche 56 eines anderen Dichtwulstes 58 in Kontakt, wobei die Schrägstellung der Stirndichtflächen 54, 56 bewirkt, daß beim Einanderannähern der Rohrstutzen 16, 32 in dem Zustand, in dem die Schließklappen 26, 34 aneinanderliegen, der Umfangsrand der jetzt gebildeten "Voll-Schließklappe" 26, 34 nicht mehr durch die Dichtwulste 52, 58 an einem Verschwenken gehindert ist. Gleichzeitig liegen die Stirndichtflächen 54, 56 dicht aneinander an und dichten die Stoßstelle zwischen den beiden Rohrstutzen 16, 32 zuverlässig gegen Außenatmosphäre ab

Beim Auseinanderfahren der Rohrstutzen 16, 32, nachdem also die Schließklappen 26, 34 wieder in die in Fig. 6 gezeigte Position gebracht worden sind, wölben sich die Stirndichtflächen 54, 56 der beiden Rohrstutzen in die in Fig. 5 gezeigte Position nach innen zurück und bewirken ein Abdichten der Schließklappen 26, 34 jeweils für sich gegenüber dem betreffenden Rohrstutzen 16, 32, ehe Außenatmosphäre in die Stoßstelle eindringen kann.

### Bezugszeichenliste

- 10: = Behältnis
- 12: = Behältnis
- 14: = Pfeil
- 16: = erster Rohrstutzen
- 18: = Sperreinrichtung
- 20: = Sperrantrieb
- 22: = Pneumatikzylinder
- 24: = Pneumatikzylinder
- 26: = erste Schließklappe
- 28: = Schwenkantrieb
- 30: = Zentrierbohrung
- 32: = zweiter Rohrstutzen
- 34: = zweite Schließklappe
- 36: = Zentrierstift
- 38: = Produktstrom
- 40: = erste Lagerschale
- 42: = zweite Lagerschale
- 44: = erste Halbachse
- 46: = zweite Halbachse
- 48: = Stirnfläche
- 50: = Stirnfläche
- 52: = Dichtwulst
- 54: = Stirndichtfläche
- 56: = Stirndichtfläche
- 58: = Dichtwulst

## Patentansprüche

1. Vorrichtung zum Kuppeln von zwei jeweils einen Anschlußrohrstutzen (16, 32) mit im wesentlichen kreisförmigem Querschnitt aufweisenden Behältnissen (10, 12), wobei jeder der Rohrstutzen (16, 32) nahe seinem dem ihn tragenden Behältnis (10, 12) abgewandten Ende eine um einen Durchmesser des Rohrstutzens (16, 32) um im wesentlichen 90° schwenkbare, mit ihrem Außendurchmesser im wesentlichen dem Innendurchmesser des Rohrstutzens (16, 32) entsprechende Schließklappe (26, 34) mit im wesentlichen kreisförmigem Querschnitt aufweist, die aus einer Schließstellung, in der sie im wesentlichen quer zur Längsmittelachse des betreffenden Rohrstutzens (16, 32) steht, in eine Offenstellung, in der sie im wesentlichen parallel zur Längsmittelachse des betreffenden Rohrstutzens (16, 32) steht, mittels eines Schwenkantriebs (28) überführbar ist, wobei die Schließklappen (26, 34) mittels jeweils einer im Querschnitt im wesentlichen halbkreissektorförmigen Halbachse (44, 46), deren Ebene, dem den jeweiligen Rohrstutzen (16, 32) tragenden Behältnis (10, 12) abgewandte Stirnfläche (48, 50) im wesentlichen mit der dem betreffenden Behältnis (10, 12) abgewandten Stirnfläche der betreffenden Schließklappe (26, 34) fluchtet und die mit der jeweiligen Schließklappe (26, 34) fest verbunden sind, derart gelagert sind, daß die Stirnflächen (48, 50) in Schließstellung mit der Stirnfläche des betreffenden Rohrstutzens (16, 32) fluchten, wobei beide Schließklappen (26, 34) nach zentriertem Aneinanderdrücken der Stirnflächen der Rohrstutzen (16, 32) mittels des Schwenkantriebes (28) um eine aus den beiden Halbachsen (44, 46) gebildete Vollachse zwischen ihrer Schließ- und ihrer Offenstellung verschwenkbar sind, dadurch gekennzeichnet, daß die Schließklappen (26, 34) in jeweils diametral einander gegenüberliegenden, zur jeweiligen Halbachse komplementären Lagerschalen (40, 42) gelagert sind, daß nur eine (44) der Halbachsen (44, 46) unmittelbar durch den Schwenkantrieb (28) beaufschlagbar ist, daß die Schließklappen (26, 34) unter Mitnehmen der nicht unmittelbar angetriebenen Schließklappe (34) in dem aus den beiden Lagerschalen (42, 44) gebildeten Lager verschwenkbar sind und daß die Schließklappen (26, 34) in je einem im wesentlichen kreisförmigen Dichtwulst (58, 52) derartiger Querschnittskonfiguration gelagert sind, daß die kreisringförmige Stirnfläche des jeweiligen Rohrstutzens (16, 32) in einem Zustand, in dem die zugeordnete Schließklappe (26, 34) geschlossen und der andere Rohrstutzen nicht angedrückt ist, von dem gleichzeitig die betreffende Schließklappe dicht lagernden Dichtwulst derart abgedeckt ist, daß eine dem Rohrstutzen abgewandte Stirndichtfläche (56, 54) des jeweiligen Dichtwulstes derartig schräg radial nach außen in Richtung auf den anzuschließenden anderen Rohrstutzen ansteigt, daß beim Andrücken der beiden Rohrstutzen unter Abdichtung der Stoßstelle durch die Stirndichtflächen (54, 56) die dichtflächennahen Bereiche beider Dichtwulste (52, 56) radial nach außen gedrückt werden und die Schließklappen (26, 34) zum Verschwenken entlasten, so daß ein zylindrischer Querschnitt erhalten bleibt und der Spalt zwischen den Schließklappen (26, 34) sicher geschlossen wird.

2. Vorrichtung nach Anspruch 1, dadurch gekennzeichnet, daß der Schwenkantrieb (28) lösbar mit der einen (44) der Halbachsen (44, 46) verbindbar ist.

3. Vorrichtung nach Anspruch 1 oder 2, dadurch gekennzeichnet, daß der die lösbar mit dem Schwenkantrieb (28) verbindbare Halbachse (44) aufweisende Rohrstutzen (16) an einem feststehenden Behältnis und der andere Rohrstutzen (32) an einem beweglichen Behältnis angebracht ist.

4. Vorrichtung nach einem der vorangehenden Ansprüche, dadurch gekennzeichnet, daß mindestens einer der Rohrstutzen (16, 32) schwimmend gelagert ist.

5. Vorrichtung nach einem der vorangehenden Ansprüche, dadurch gekennzeichnet, daß die Rohrstutzen (16, 32) zueinander komplementäre Grobzentriereinrichtungen (30, 36) aufweisen.

6. Vorrichtung nach einem der vorangehenden Ansprüche, dadurch gekennzeichnet, daß die Schließklappen (26, 34) und/oder deren Halbachsen (44, 46) zueinander komplementäre Feinzentriereinrichtungen aufweisen.

7. Vorrichtung nach Anspruch 1, dadurch gekennzeichnet, daß bei getrenntem Zustand der beiden Rohrstutzen (16, 32) der Dichtwulst (52, 58) die Kante der Schließklappen (26, 34) abdeckt.

8. Vorrichtung nach Anspruch 1, dadurch gekennzeichnet, daß mindestens eine der beiden Schließklappen (26, 34) an der äußeren Ringfläche einen flexiblen Dichtwulst aufweist, sodaß nach dem Fügen und Öffnen der Schließklappen eine Abdichtung der Klappenhälften zueinander gegeben ist.

9. Vorrichtung nach einem der vorangehenden Ansprüche, dadurch gekennzeichnet, daß mindestens eine der Schließklappen (26, 34) eine Blaseinrichtung zum Beaufschlagen der zwischen den aufeinandergedruckten Schließklappen sich bildenden Stoßkammer mit Reinigungs- und/oder Schutzgas aufweist.

10. Vorrichtung nach Anspruch 9, gekennzeichnet durch eine die Stoßkammer umgebende Absaugkammer.

11. Vorrichtung nach einem der vorangehenden Ansprüche, da durch gekennzeichnet, daß mindestens eine der Lagerschalen (40, 42) aus Gleitmaterial besteht.

12. Vorrichtung nach einem der vorangehenden Ansprüche, dadurch gekennzeichnet, daß die Schließklappen (26, 34) um eine im wesentlichen senkrecht zu ihrer jeweiligen Halbachse (44, 46) liegende Kippachse im wesentlichen vollständig aus den Lagerschalen (40, 42) herauskippbar sind.

## Claims

1. Apparatus for coupling two containers (10, 12) each having a connecting spout (16, 32) of substantially circular cross-section, wherein each of the spouts (16, 32) has, near its end remote from the container (10, 12) bearing it, a closure flap (26, 34) which is pivotable through substantially 90° about a diameter of the spout (16, 32) and the outside diameter of which corresponds substantially to the inside diameter of the spout (16, 32), each closure flap being of substantially circular cross-section and being transferable by means of a pivoting drive (28) from a closed position, in which it is situated substantially transversely of the central longitudinal axis of the associated spout (16, 32), into an open position in which it is substantially parallel to the central longitudinal axis of the associated spout (16, 32), wherein the closure flaps (26, 34) are so mounted, each by means of a half axle (44, 46), of substantially semi-circle segmental cross-section, the flat end face (48, 50) of which remote from the container (10, 12) bearing the respective spout (16, 32) is substantially in alignment with the end face of the associated closure flap (26, 34) remote from the associated container (10, 12) and which are rigidly connected to the respective closure flap, that the end faces (48, 50) in the closed position are in alignment with the end face of the respective spout (16, 32), wherein, after the end faces of the spouts (16, 32) have been pressed into centred contact with one another, the two closure flaps (26, 34) are pivotable by means of the pivoting drive (28) between their closed position and their open position about a full axle formed by the two half axles (44, 46), characterised in that the closure flaps (26, 34) are mounted in respectively diametrically opposite bearing bushes (40, 42) complementary to the respective half axle, in that only one (44) of the half axles (44, 46) can be directly actuated by the pivoting drive (28), in that the closure flaps (26, 34) are pivotable in the bearing formed by the two bearing bushes (42, 44), the not directly driven closure flap (34) being entrained, and in that the closure flaps (26, 34) are each mounted in a substantially circular sealing bead (58, 52) of a cross-sectional configuration such that the circular annular end face of the respective spout (16, 32) is so covered, in a condition in which the associated closure flap (26, 34) is closed and the other spout is not pressed into contact, covering being effected by the sealing bead, which simultaneously provides a sealed mounting for the associated closure flap, that an end sealing surface (56, 54) of the respective sealing bead remote from the spout so slopes obliquely radially outwards in the direction of the other spout requiring to be connected that when the two spouts are pressed into contact with the joint sealed by the end sealing surfaces (54, 56) those zones of the two sealing beads (52, 56) which are near the sealing surface are pressed radially outwards and relieve the closure flaps (26, 34) for pivoting, so that a cylindrical cross-section is maintained and the gap between the closure flaps (26, 34) is securely closed.

2. Apparatus according to claim 1, characterised in that the pivoting drive (28) is releasably connectable to one (44) of the half axles (44, 46).

3. Apparatus according to claim 1 or 2, characterised in that the spout (16) having the half axle (44) releasably connectable to the pivoting drive (28) is mounted on a stationary container and the other spout (32) is mounted on a movable container.

4. Apparatus according to any one of the preceding claims, characterised in that at least one of the spouts (16, 32) has a floating mounting.

5. Apparatus according to any one of the preceding claims, characterised in that the spouts (16, 32) have rough centring means (30, 36) which are complementary to one another.

6. Apparatus according to any one of the preceding claims, characterised in that the closure flaps (26, 34) and/or their half axles (44, 46) have fine centring means complementary to one another.

7. Apparatus according to claim 1, characterised in that when the two spouts (16, 32) are in the separated state the sealing bead (52, 58) covers the edge of the closure flaps (26, 34).

8. Apparatus according to claim 1, chracterised in that at least one of the two closure flaps (26, 34) has a flexible sealing bead at the outer annular surface so that after joining and opening of the closure flaps the flap halves are sealed off from one another.

9. Apparatus according to any one of the preceding claims, characterised in that at least one of the closure flaps (26, 34) has blast means for blowing cleaning and/or protective gas into the junction chamber forming between the closure flaps pressed into contact.

10. Apparatus according to claim 9, characterised by a suction chamber surrounding the junction chamber.

11. Apparatus according to any one of the preceding claims, characterised in that at least one of the bearing bushes (40, 42) consists of friction material.

12. Apparatus according to any one of the preceding claims, characterised in that the closure flaps (26, 34) are adapted to tip substantially completely out of the bearing bushes (40, 42) about a tipping axis situated substantially perpendicularly to their respective half axle (44, 46).

## Revendications

1. Dispositif d'accouplement de deux récipients (10, 12) présentant chacun une tubulure de raccordement (16, 32) à section transversale sensiblement circulaire, chacune des tubulures (16, 32) présentant, à proximité de son extrémité opposée au récipient (10, 12) le portant, un volet de fermeture (26, 34), susceptible de pivoter de sensiblement 90°, correspondant par son diamètre extérieur sensiblement au diamètre intérieur de la tubulure (16, 32) et ayant une section transversale sensiblement circulaire, volet de fermeture susceptible d'être amené au moyen d'un entraînement pivotant (28) d'une position de fermeture, dans laquelle il se trouve orienté sensiblement transversalement par rapport à l'axe longitudinal de la tubulure (16, 32) concernée, à une position d'ouverture dans laquelle il est placé sensiblement parallèlement à l'axe longitudinal de la tubulure (16, 32) concernée, les volets de fermeture (26, 34) étant montés, chacun au moyen d'un demi-axe (44, 46) ayant chacun une section transversale sensiblement en forme de secteur de demi-cercle, demi-axe dont le plan qui est celui de la face frontale (48, 50), opposée au récipient (10, 12) portant la tubulure (16, 32) respective, est aligné sensiblement avec celui de la face frontale, opposée au récipient (10, 12) concernée, du volet de fermeture (26, 34) afférent et les demi-axes étant reliés rigidement aux volets de fermeture (26, 34) respectifs, de manière que les faces frontales (48, 50), lorsque l'on est en position de fermeture, soient alignées avec la face frontale de la tubulure (16, 32) concernée, les deux volets de fermeture (26, 34) étant susceptibles, au moyen de l'entraînement pivotant (28), de pivoter, après pressage centré, l'une contre l'autre, des faces frontales des tubulures (16, 32), autour d'un axe plein constitué des deux demi-axes (44, 46), ce pivotement se faisant entre leur position de fermeture et leur position d'ouverture, caractérisé par le fait que les volets de fermeture (26, 34) sont montés dans des coquilles de palier (40, 42) complémentaires par rapport aux demi-axes respectifs et mutuellement diamétralement opposées, que seul l'un (44) des demi-axes (44, 46) est susceptible d'être sollicité directement par l'entraînement pivotant (28), que les volets de fermeture (26, 34) sont susceptibles de pivoter avec entraînement du volet de fermeture (34) non entraîné directement, ce pivotement se faisant dans le palier constitué par les deux coquilles de palier (42, 44), et que les volets de fermeture (26, 34) sont montés chacun dans un bourrelet d'étanchéité (58, 52) à forme sensiblement circulaire, avec une configuration de section transversale telle que la face frontale en forme d'anneau de cercle de la tubulure (16, 32) respective, lorsque l'on se trouve dans un état dans lequel le volet de fermeture (26, 34) associé est fermé et que l'autre tubulure n'est pas appliquée avec pression, est recouverte par le bourrelet d'étanchéité assurant un montage étanche simultané du volet de fermeture concerné, de manière qu'une face d'étanchéité frontale (56, 54), opposée à la tubulure et appartenant au bourrelet d'étanchéité respectif, soit orientée en montant obliquement radialement vers l'extérieur dans la direction de l'autre tubulure à raccorder, de manière que, lors de l'application avec pressage des deux tubulures avec obtention d'une étanchéité, la zone de jointoiement, constituée par les faces d'étanchéité frontales (54, 56), les zones, proches des surfaces d'étanchéité, des deux bourrelets d'étanchéité (52, 56) sont poussées radialement vers l'extérieur et déchargent les volets de fermeture (26, 34) en vue du pivotement, de manière à conserver une section transversale cylindrique et à fermer de façon sure l'interstice existant entre les volets de fermeture (26, 34).

2. Dispositif selon la revendication 1, caractérisé par le fait que l'entraînement de pivotement (28) est susceptible d'être relié de façon désolidarisable à l'un (44) des demi-axes (44, 46).

3. Dispositif selon la revendication 1 ou 2, caractérisé par le fait que la tubulure (16) présentant le demi-axe (44) susceptible d'être relié de façon désolidarisable à l'entraînement pivotant (28), est montée sur un récipient fixe et l'autre tubulure (32) est montée sur un récipient mobile.

4. Dispositif selon l'une des revendications précédentes, caractérisé par le fait qu'au moins l'une des tubulures (16, 32) est montée flottante.

5. Dispositif selon l'une des revendications précédentes, caractérisé par le fait que les tubulures (16, 32) présentent des dispositifs de centrage grossiers (30, 36) complémentaires l'un de l'autre.

6. Dispositif selon l'une des revendications précédentes, caractérisé par le fait que les volets de fermeture (26, 34) et/ou leurs demi-axes (44, 46) présentent des dispositifs de centrage fins complémentaires l'un de l'autre.

7. Dispositif selon la revendication 1, caractérisé par le fait que, lorsque l'on est en état de séparation des deux tubulures (16, 32), le bourrelet d'étanchéité (52, 58) recouvre l'arête des volets de fermeture (26, 34).

8. Dispositif selon la revendication 1, caractérisé par le fait qu'au moins l'un des deux volets de fermeture (26, 34) présente sur la surface annulaire extérieure un bourrelet d'étanchéité flexible, de manière qu'après le jointoiement et l'ouverture des volets de fermeture, on obtienne une étanchéité mutuelle entre les demi-volets.

9. Dispositif selon l'une des revendications précédentes, caractérisé par le fait qu'au moins l'un des volets de fermeture (26, 34) présente un dispositif de soufflage destiné à alimenter, avec un gaz de nettoyage et/ou de protection, la chambre de jointoiement se constituant entre les volets de fermeture pressés l'un contre l'autre.

10. Dispositif selon la revendication 1, caractérisé par une chambre d'aspiration entourant la chambre de jointoiement.

11. Dispositif selon l'une des revendications précédentes, caractérisé par le fait qu'au moins l'un des coussinets de palier (40, 42) est constitué d'un matériau pour le glissement.

12. Dispositif selon l'une des revendications précédentes, caractérisé par le fait que les volets de fermeture (26, 34) sont susceptibles d'être basculés pratiquement complètement hors des coussinets de palier (40, 42) en les faisant tourner autour d'un axe de basculement passant sensiblement perpendiculairement par rapport à son demi-axe (44, 46) respectif.
